# EUROPEAN PATENT SPECIFICATION

(11) **EP 3 162 704 B1**
(45) Date of publication and mention of the grant of the patent: **06.03.2019**
(21) Application number: 14896036.2
(22) Date of filing: 26.06.2014
(51) Int. Cl.: H02G 3/04, B64C 39/02, B64C 1/36, B64C 25/06, B64C 25/60

(54) **AN AERIAL VEHICLE AND A SIGNAL LINE PROTECTION ASSEMBLY THEREOF**
EIN LUFTFAHRZEUG UND EINE SIGNALLEITUNGSCHUTZANORDNUNG DAFÜR
UN VÉHICULE AÉRIEN ET UN ENSEMBLE DE PROTECTION DES LIGNES DE SIGNAUX DE CELUI-CI

(43) Date of publication of application: 03.05.2017
(60) Divisional application: 19152781.1
(73) Proprietor: SZ DJI Technology Co., Ltd., Shenzhen, Guangdong 518057 (CN)
(72) Inventor: OU, Di, Shenzhen Guangdong 518057 (CN)
(74) Representative: Appelt, Christian W.
(86) International application number: PCT/CN2014/080845
(87) International publication number: WO 2015/196418

(56) References cited:
- EP-A1- 2 933 189
- EP-A2- 2 416 463
- CN-A- 1 639 500
- CN-A- 1 639 500
- CN-A- 102 381 471
- CN-A- 103 786 878
- CN-U- 203 047 530
- CN-U- 203 306 225
- DE-A1-102005 014 948
- US-A1- 2012 241 555
- US-A1- 2013 287 577

## Description

### TECHNICAL FIELD

The present invention relates to an unmanned aerial vehicle (UAV), and more particularly, to an aerial vehicle and a signal line protection assembly thereof.

### BACKGROUND OF THE INVENTION

An unmanned aerial vehicle is supported on the ground by foot stands before it takes off. The flight of UAV completes after the foot stands touch the ground in landing. A plurality of signal lines are introduced since the foot stands may be provided with various components including propulsion systems, electronic speed controllers, etc. In prior art, the signal lines are disposed along an exterior of the foot stands, making them vulnerable to damages from external environment.

US 2012/241555 A1 describes a support block of each motor of a drone that comprises: a support part onto which are fastened an electric motor for driving a propulsion group of the drone, and at least one component of the propulsion group intended to be coupled to the motor; a stand foot for supporting the drone on the ground; and a connection element extending between the support part and the stand foot. The stand foot and the connection element providing together a clearance space for the electric motor during the placement of the motor in its fastening position on the support part.

### SUMMARY OF THE INVENTION

The present invention provides an aerial vehicle and a signal line protection assembly thereof to solve the prior art problem that a signal line is vulnerable to damages from external environment.

To address the technical problem as discussed hereinabove, a technical solution proposed in the present invention provides a signal line protection assembly as defined by independent claim 1. Preferred embodiments are described in dependent claims 2 to 8.

According to the invention, a signal line protection assembly for an aerial vehicle is provided, wherein the signal line protection assembly comprises a foot stand and a protection sleeve, the foot stand comprises a foot stand sleeve, at least a portion of the protection sleeve is received in the foot stand sleeve, the protection sleeve is configured to receive a signal line therein to prevent the signal line from damages of external environment, wherein the foot stand sleeve comprises a bearing member and a receiving portion, one side of the bearing member is configured to bear a propulsion system for driving a rotor, the receiving portion is provided at the other side of the bearing member for receiving and fixing the protection sleeve, wherein the foot stand is provided with an electronic speed controller compartment for receiving an electronic speed controller of the aerial vehicle, the bearing member of the foot stand sleeve is disposed on the electronic speed controller compartment, and wherein the receiving portion of the foot stand sleeve is received in the electronic speed controller compartment, such that the protection sleeve is received in the electronic speed controller compartment and is configured to extend below the propulsion system.

In some embodiments, glue is provided at position where the protection sleeve contacts with the receiving portion so as to fix the protection sleeve.

In some embodiments, at least two foot stands are provided. Two ends of the protection sleeve are respectively received in the foot stand sleeves of the foot stand. The protection sleeve is provided with a wire inlet. The bearing member of the foot stand sleeve is provided with a wire outlet at a position corresponding to the end of the protection sleeve. A signal line can be routed through the protection sleeve from the wire inlet to the end of the protection sleeve 131, and further leaded out to the propulsion system through the wire outlet.

In some embodiments, the foot stand comprises a lower cover below the electronic speed controller compartment. One end of the lower cover is connected with one end of the electronic speed controller compartment. The lower cover is provided with an antenna compartment for receiving an antenna and preventing the antenna from damages of external environment. The antenna is capable of receiving an external signal.

In some embodiments, the protection sleeve receives a data line and a power line of the electronic speed controller and a data line of the antenna.

To address the technical problem as discussed hereinabove, a technical solution proposed in the present invention provides an aerial vehicle comprising a signal line protection assembly, as defined in claim 9.

As compared to the prior art, in the present invention, at least a portion of the protection sleeve is received in the foot stand sleeve, and the signal line is received in the protection sleeve, such that the signal line is received within the foot stand sleeve. The signal line is prevented from damages of external environment.

### BRIEF DESCRIPTION OF THE DRAWINGS

**FIG. 1** is a diagram showing a structure of an aerial vehicle in accordance with an embodiment of the present invention;
**FIG. 2** is an exploded view of a foot stand of **FIG. 1****;**
**FIG. 3** is a front view of a signal line protection assembly of **FIG. 1****;**
**FIG. 4** is a section view of a signal line protection assembly along E-F of **FIG. 3****.**

### DETAILED DESCRIPTION OF THE INVENTION

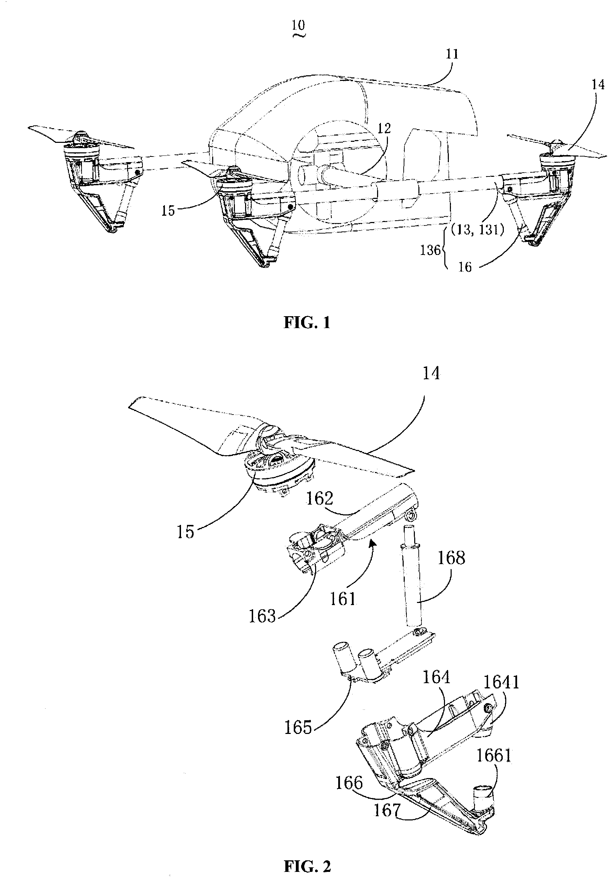

As shown in **FIG. 1****,** an aerial vehicle **10** of the present invention comprises a vehicle body **11,** at least two arms **12** extending from the vehicle body **11** and a support member **13** extending in a direction perpendicular to an extending direction of the arms **12.** A rotor **14,** a propulsion system **15** of the rotor and a foot stand **16** are provided at each end of the support member **13.**

In some embodiments, a signal line protection assembly **136** of the aerial vehicle **10** can comprise the support **13** and the foot stand **16.** In some instances, the support **13** can also function as a protection sleeve **131.** The protection sleeve **131** can be a carbon tube for receiving a signal line **100** therein.

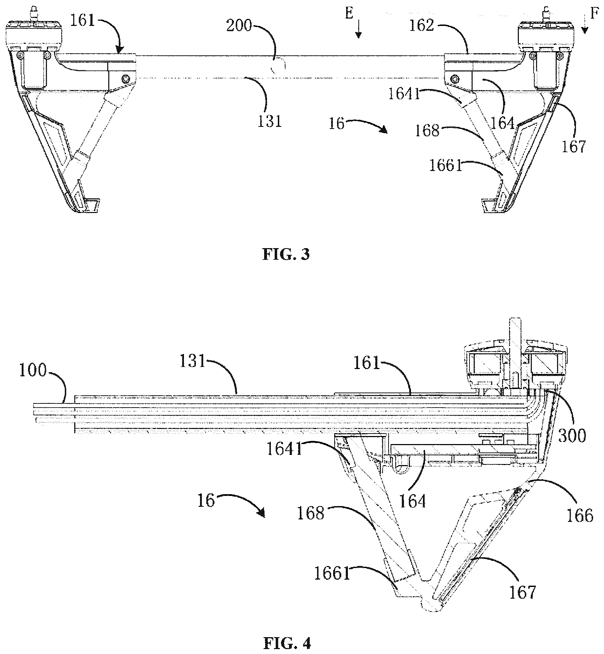

Referring to **FIGS. 2-4****,** the foot stand **16** comprises a foot stand sleeve **161** for bearing the rotor **14** and the propulsion system **15** that drives the rotor **14.** A portion of the protection sleeve **131** is received in the foot stand sleeve **161.** The protection sleeve **131** receives the signal line **100** therein to prevent the signal line **100** from damages from external environment. In some embodiments, the signal line **100** is used to transmit a driving signal to the propulsion system **15.**

In some embodiments, the signal line **100** can be effectively protected by being received in the protection sleeve **131.** The configuration can also be beneficial in reducing a volume.

Alternatively, the protection sleeve **131** can be otherwise additionally provided. The protection sleeve **131** can be entirely received in the support **13** and the foot stand sleeve **161.**

The foot stand sleeve **161** comprises a bearing member **162** and a receiving portion **163.** One side of the bearing member **162** bears the rotor **14** and the propulsion system **15.** The receiving portion is provided at the other side of the bearing member **162** for receiving and fixing the protection sleeve **131.** In some instances, at least two receiving portions **163** can be provided to securely fix the protection sleeve. The receiving portions **163** can be provided at two ends of the other side of the bearing member **162.**

In some instances, glue can be provided at a position where the protection sleeve **131** contacts with the receiving portion **163** so as to further fix the protection sleeve **131.** In some embodiments, glue can also be provided at the other side of the bearing member **162** to further fix the protection sleeve **131.** As compared to conventional structures in which screws and the like are employed, the weight of apparatus is reduced by fixing the protection sleeve **131** by the receiving portion **163** and the glue.

The embodiment of **FIG. 1** shows a quad-rotor aerial vehicle which comprises two supports **13** and four foot stands **16.** The four foot stands **16** are respectively provided at the two ends of each of the two supports **13.** Only one signal line protection assembly comprising one support **13** and two corresponding foot stands **16** is illustrated and described here for the sake of convenience. As shown in **FIGS. 2-4****,** the two ends of the protection sleeve **131** are respectively received in the foot stand sleeves **161** of the two foot stands **16.** In some instances, each end of the protection sleeve **131** is inserted into the receiving portion **163** at one end of the foot stand sleeve **161** and reaches the receiving portion **163** at the other end of the foot stand sleeve **161.**

The protection sleeve **131** is provided with a wire inlet **200.** The bearing member **162** of the foot stand sleeve **161** is provided with a wire outlet **300** at a position corresponding to the end of the protection sleeve **131.** The signal line **100** can be routed through the protection sleeve **131** from the wire inlet **200** to the end of the protection sleeve **131,** and further leaded out to the propulsion system 15 through the wire outlet **300.**

In view of **FIG. 1****,** it can be appreciated that the wire inlet **200** of the protection sleeve **131** is preferably provided at a joint of the support **13** and the arm **12.**

The foot stand **16** of the present embodiment is provided with an electronic speed controller compartment **164** for receiving an electronic speed controller **165** of the aerial vehicle **10.** The electronic speed controller **165** controls a rotating speed of a motor of the propulsion system **15** by varying a voltage. The bearing member **162** of the foot stand sleeve **161** are disposed on the electronic speed controller compartment **164,** and the receiving portion **163** of the foot stand sleeve **161** is received in the electronic speed controller compartment **164,** such that the protection sleeve **131** is received in the electronic speed controller compartment **164** to reduce a volume.

The foot stand **16** can further comprise a lower cover **166** below the electronic speed controller compartment **164.** One end of the lower cover **166** is connected with one end of the electronic speed controller compartment **164.** The lower cover **166** can be provided with an antenna compartment **167** for receiving an antenna capable of receiving an external signal. The antenna compartment can prevent the antenna from damages of external environment. In some embodiments, the antenna comprises an antenna for image transmission.

In some embodiments, the signal line **100** can comprise a power line and a data line of the electronic speed controller **165** and a data line of a control antenna. The protection sleeve **131** can receive therein the power line and the data line of the electronic speed controller **165** and the data line of the control antenna.

The foot stand **16** can further comprise a shock absorber **168.** The shock absorber can be connected between the other end of the electronic speed controller compartment **164** and the other end of the lower cover **166.** The shock absorber, the electronic speed controller compartment and the lower cover forms a triangular structure. In some instances, the other end of the electronic speed controller compartment **164** is provided with a fixing portion **1641,** and the other end of the lower cover **166** is provided with a fixing portion **1661.** The two ends of the shock absorber **168** are respectively inserted into a sleeve structure of the fixing portion **1641** and the fixing portion **1661.** The shock absorber **168** can be a hydraulic damping shock absorber.

The signal line and the antenna can be effectively protected by being received respectively in the protection sleeve and the antenna compartment.

A weight of the aerial vehicle can be effectively reduced by fixing the protection sleeve and the foot stand sleeve with glue.

While preferred embodiments of the invention have been shown and described in the disclosure, it will obvious to those in the art that the scope of the invention is limited only by the scope of the appended claims. It is intended that any equivalent modifications or variations made by those ordinarily skilled in the art to the disclosure of the invention is within the scope of the invention, insofar as they are within the scope of the following claims.

## Claims

1. A signal line (100) protection assembly (136) for an aerial vehicle (10), wherein the signal line protection assembly (136) comprises a foot stand (16) and a protection sleeve (131), the foot stand comprises a foot stand sleeve (161), at least a portion of the protection sleeve (131) is received in the foot stand sleeve (161), the protection sleeve (131) is configured to receive a signal line (100) therein to prevent the signal line (100) from damages of external environment, wherein the foot stand sleeve (161) comprises a bearing member (162) and a receiving portion (163), one side of the bearing member (162) is configured to bear a propulsion system (15) for driving a rotor (14), the receiving portion (163) is provided at the other side of the bearing member (162) for receiving and fixing the protection sleeve (131),
wherein the foot stand (16) is provided with an electronic speed controller compartment (164) for receiving an electronic speed controller (165) of the aerial vehicle (10), the bearing member (162) of the foot stand sleeve (161) is disposed on the electronic speed controller compartment (164),
**characterized in that**
the receiving portion (163) of the foot stand sleeve (161) is received in the electronic speed controller compartment (164), such that the protection sleeve (131) is received in the electronic speed controller compartment (164) and is configured to extend below the propulsion system (15).

2. The signal line protection assembly (136) of claim 1, wherein glue is provided at position where the protection sleeve (131) contacts with the receiving portion (163) so as to fix the protection sleeve (131).

3. The signal line protection assembly (136) of claim 1, wherein at least two foot stands (16) are provided, two ends of the protection sleeve (131) are respectively received in the two foot stand sleeves (161) of the foot stand (16); the protection sleeve (131) is provided with a wire inlet (200), the bearing member (162) of the foot stand sleeve (161) is provided with a wire outlet (300) at a position corresponding to the end of the protection sleeve (131), the signal line (100) can be routed through the protection sleeve (131) from the wire inlet (200) to the end of the protection sleeve (131), and can be lead out to the propulsion system (15) through the wire outlet (300).

4. The signal line (100) protection assembly (136) of claim 1, wherein the foot stand (16) comprises a lower cover (166) below the electronic speed controller compartment (164), one end of the lower cover (166) is connected with one end of the electronic speed controller compartment (164), the lower cover (166) is provided with an antenna compartment (167) for receiving an antenna and preventing the antenna from damages of external environment, the antenna is capable of receiving an external signal.

5. The signal line protection assembly (136) of claim 4, wherein the protection sleeve (131) is configured to receive a data line and a power line of the electronic speed controller (165) and a data line of the antenna.

6. The signal line protection assembly (136) of claim 4, wherein the foot stand (16) comprises a shock absorber (168) that is connected between the other end of the electronic speed controller compartment (164) and the other end of the lower cover (166), wherein the shock absorber, the electronic speed controller compartment and the lower cover form a triangular structure.

7. The signal line protection assembly (136) of claim 6, wherein the shock absorber (168) is a hydraulic damping shock absorber.

8. The signal line protection assembly (136) of any one of claims 6 to 7, wherein the other end of the electronic speed controller compartment (164) is provided with a first fixing portion (1641) and the other end of the lower cover (166) is provided with a second fixing portion (1661), wherein the two ends of the shock absorber (168) respectively inserted into a sleeve structure of the first fixing portion (1641) and the second fixing portion (1661).

9. An aerial vehicle (10), wherein the aerial vehicle (10) comprises the signal line protection assembly (136) according to any one of claims 1 to 8.

## Patentansprüche

1. Signalleitungs(100)-Schutzanordnung (136) für ein Luftfahrzeug (10), wobei die Signalleitungsschutzanordnung (136) einen Fußständer (16) und eine Schutzhülse (131) umfasst, der Fußständer eine Fußständerhülse (161) umfasst, mindestens ein Abschnitt der Schutzhülse (131) in der Fußständerhülse (161) aufgenommen ist, die Schutzhülse (131) dazu ausgelegt ist, eine Signalleitung (100) darin aufzunehmen, um zu verhindern, dass die Signalleitung (100) von einer externen Umgebung beschädigt wird, wobei die Fußständerhülse (161) ein Lagerelement (162) und einen Aufnahmeabschnitt (163) umfasst, eine Seite des Lagerelements (162) dazu ausgelegt ist, ein Antriebssystem (15) zum Antreiben eines Rotors (14) zu tragen, der Aufnahmeabschnitt (163) auf der anderen Seite des Lagerelements (162) zum Aufnehmen und Befestigen der Schutzhülse (131) bereitgestellt ist,
wobei der Fußständer (16) mit einem elektronischen Geschwindigkeitssteuerungsfach (164) zum Aufnehmen einer elektronischen Geschwindigkeitssteuerung (165) des Luftfahrzeugs (10) versehen ist, das Lagerelement (162) der Fußständerhülse (161) auf dem elektronischen Geschwindigkeitssteuerungsfach (164) angeordnet ist, **dadurch gekennzeichnet, dass**
der Aufnahmeabschnitt (163) der Fußständerhülse (161) im elektronischen Geschwindigkeitssteuerungsfach (164) aufgenommen ist, derart, dass die Schutzhülse (131) im elektronischen Geschwindigkeitssteuerungsfach (164) aufgenommen und dazu ausgelegt ist, sich unter das Antriebssystem (15) zu erstrecken.

2. Signalleitungsschutzanordnung (136) nach Anspruch 1, wobei in einer Position, in der die Schutzhülse (131) den Aufnahmeabschnitt (163) kontaktiert, Leim bereitgestellt ist, um die Schutzhülse (131) zu befestigen.

3. Signalleitungsschutzanordnung (136) nach Anspruch 1, wobei mindestens zwei Fußständer (16) bereitgestellt sind, zwei Enden der Schutzhülse (131) jeweils in die Fußständerhülse (161) des Fußständers (16) aufgenommen sind; die Schutzhülse (131) mit einem Drahteinlass (200) versehen ist, das Lagerelement (162) der Fußständerhülse (161) in einer Position, die dem Ende der Schutzhülse (131) entspricht, mit einem Drahtauslass (300) versehen ist, die Signalleitung (100) vom Drahteinlass (200) durch die Schutzhülse (131) zum Ende der Schutzhülse (131) verlegt werden kann und durch den Drahtauslass (300) aus dem Antriebssystem (15) geführt werden kann.

4. Signalleitungs(100)-Schutzanordnung (136) nach Anspruch 1, wobei der Fußständer (16) eine untere Abdeckung (166) unter dem elektronischen Geschwindigkeitssteuerungsfach (164) umfasst, ein Ende der unteren Abdeckung (166) mit einem Ende des elektronischen Geschwindigkeitssteuerungsfachs (164) verbunden ist, die untere Abdeckung (166) mit einem Antennenfach (167) zum Aufnehmen einer Antenne und Verhindern, dass die Antenne von einer externen Umgebung beschädigt wird, versehen ist, die Antenne in der Lage ist, ein externes Signal zu empfangen.

5. Signalleitungsschutzanordnung (136) nach Anspruch 4, wobei die Schutzhülse (131) dazu ausgelegt ist, eine Datenleitung und eine Stromleitung der elektronischen Geschwindigkeitssteuerung (165) und eine Datenleitung der Antenne aufzunehmen.

6. Signalleitungsschutzanordnung (136) nach Anspruch 4, wobei der Fußständer (16) einen Stoßdämpfer (168) umfasst, der zwischen dem anderen Ende des elektronischen Geschwindigkeitssteuerungsfachs (164) und dem anderen Ende der unteren Abdeckung (166) verbunden ist, wobei der Stoßdämpfer, das elektronische Geschwindigkeitssteuerungsfach und die untere Abdeckung eine Dreiecksstruktur bilden.

7. Signalleitungsschutzanordnung (136) nach Anspruch 6, wobei der Stoßdämpfer (168) ein hydraulisch dämpfender Stoßdämpfer ist.

8. Signalleitungsschutzanordnung (136) nach einem der Ansprüche 6 bis 7, wobei das andere Ende des elektronischen Geschwindigkeitssteuerungsfachs (164) mit einem ersten Befestigungsabschnitt (1641) und das andere Ende der unteren Abdeckung (166) mit einem zweiten Befestigungsabschnitt (1661) versehen ist, wobei die beiden Enden des Stoßdämpfers (168) jeweils in eine Hülsenstruktur des ersten Befestigungsabschnitts (1641) und des zweiten Befestigungsabschnitts (1661) eingesetzt sind.

9. Luftfahrzeug (10), wobei das Luftfahrzeug (10) die Signalleitungsschutzanordnung (136) nach einem der Ansprüche 1 bis 8 umfasst.

## Revendications

1. Ensemble de protection (136) de lignes de signaux (100) pour un véhicule aérien (10), dans lequel l'ensemble de protection (136) de lignes de signaux comprend un socle de pied (16) et un manchon de protection (131), le socle de pied comprend un manchon de socle de pied (161), au moins une partie du manchon de protection (131) est reçue dans le manchon de socle de pied (161), le manchon de protection (131) est configuré pour recevoir une ligne de signaux (100) à l'intérieur de ce dernier pour empêcher tout endommagement de la ligne de signaux (100) par l'environnement extérieur, dans lequel le manchon de socle de pied (161) comprend un élément de palier (162) et une partie de réception (163), un côté de l'élément de palier (162) est configuré pour supporter un système de propulsion (15) pour entraîner un rotor (14), la partie de réception (163) est prévue de l'autre côté de l'élément de palier (162) pour recevoir et fixer le manchon de protection (131),
dans lequel le socle de pied (16) est prévu avec un compartiment d'organe de commande de vitesse électronique (164) pour recevoir un organe de commande de vitesse électronique (165) du véhicule aérien (10), l'élément de palier (162) du manchon de socle de pied (161) est disposé sur le compartiment d'organe de commande de vitesse électronique (164) ,
**caractérisé en ce que** :
la partie de réception (163) du manchon de socle de pied (161) est reçue dans le compartiment d'organe de commande de vitesse électronique (164), de sorte que le manchon de protection (131) est reçu dans le compartiment d'organe de commande de vitesse électronique (164) et est configuré pour s'étendre au-dessous du système de propulsion (15).

2. Ensemble de protection (136) de lignes de signaux selon la revendication 1, dans lequel on prévoit de la colle dans la position dans laquelle le manchon de protection (131) est en contact avec la partie de réception (163) afin de fixer le manchon de protection (131).

3. Ensemble de protection (136) de lignes de signaux selon la revendication 1, dans lequel au moins deux socles de pied (16) sont prévus, les deux extrémités du manchon de protection (131) sont respectivement reçues dans les deux manchons de socle de pied (161) du socle de pied (16) ; le manchon de protection (131) est prévu avec une entrée de fil (200), l'élément de palier (162) du manchon de socle de pied (161) est prévu avec une sortie de fil (300) dans une position correspondant à l'extrémité du manchon de protection (131), la ligne de signaux (100) peut être acheminée par le manchon de protection (131) de l'entrée de fil (200) à l'extrémité du manchon de protection (131), et peut sortir du système de propulsion (15) par la sortie de fil (300).

4. Ensemble de protection (136) de lignes de signaux (100) selon la revendication 1, dans lequel le socle de pied (16) comprend un couvercle inférieur (166) au-dessous du compartiment d'organe de commande de vitesse électronique (164), une extrémité du couvercle inférieur (166) est raccordée avec une extrémité du compartiment d'organe de commande de vitesse électronique (164), le couvercle inférieur (166) est prévu avec un compartiment d'antenne (167) pour recevoir une antenne et empêcher tous endommagements de l'antenne par l'environnement extérieur, l'antenne pouvant recevoir un signal externe.

5. Ensemble de protection (136) de lignes de signaux selon la revendication 4, dans lequel le manchon de protection (131) est configuré pour recevoir une ligne de données et une ligne de puissance de l'organe de commande de vitesse électronique (165) et une ligne de données de l'antenne.

6. Ensemble de protection (136) de lignes de signaux selon la revendication 4, dans lequel le socle de pied (16) comprend un amortisseur (168) qui est raccordé entre l'autre extrémité du compartiment d'organe de commande de vitesse électronique (164) et l'autre extrémité du couvercle inférieur (166), dans lequel l'amortisseur, le compartiment d'organe de commande de vitesse électronique et le couvercle inférieur forment une structure triangulaire.

7. Ensemble de protection (136) de lignes de signaux selon la revendication 6, dans lequel l'amortisseur (168) est un amortisseur hydraulique.

8. Ensemble de protection (136) de lignes de signaux selon l'une quelconque des revendications 6 à 7, dans lequel l'autre extrémité du compartiment d'organe de commande de vitesse électronique (164) est prévue avec une première partie de fixation (1641) et l'autre extrémité du couvercle inférieur (166) est prévue avec une seconde partie de fixation (1661), dans lequel les deux extrémités de l'amortisseur (168) sont respectivement insérées dans une structure de manchon de la première partie de fixation (1641) et la seconde partie de fixation (1661).

9. Véhicule aérien (10), dans lequel le véhicule aérien (10) comprend un ensemble de protection (136) de lignes de signaux selon l'une quelconque des revendications 1 à 8.
